# NEUE EUROPÄISCHE PATENTSCHRIFT

(11) **EP 0 400 593 B2**
(45) Veröffentlichungstag und Bekanntmachung des Hinweises auf die Entscheidung über den Einspruch: **13.08.1997**
(45) Hinweis auf die Patenterteilung: 02.03.1994
(21) Anmeldenummer: 90110227.7
(22) Anmeldetag: 30.05.1990
(51) Int. Cl.: H02B 13/065

(54) **Schutz für Komponenten gasisolierter Schaltanlagen bei internen Lichtbogenfehlern gegen Durchbrennen**
Protection for gas insulated switchgear components against burn-out from internal arcing faults
Protection pour composants d'installations de commutation à isolement gazeux contre les claquage à cause d'arcs de défaut internes

(30) Priorität: 02.06.1989 DE 3917988
(43) Veröffentlichungstag der Anmeldung: 05.12.1990
(73) Patentinhaber: AEG Energietechnik GmbH, 60528 Frankfurt (DE)
(72) Erfinder: Bischoping, Thomas, D-6053 Obertshausen (DE); Münch, Roland, Dipl.-Ing., D-5100 Aachen (DE); Möller, Klaus, Prof.- Dr. Ing., D-5100 Aachen (DE)
(74) Vertreter: Dreiss, Fuhlendorf, Steimle & Becker

(56) Entgegenhaltungen:
- CH-A- 596 686
- DE-A- 1 282 768
- DE-A- 2 314 675
- DE-A- 2 360 071
- DE-A- 2 710 843
- DE-A- 2 849 560
- DE-C- 646 631
- DE-U- 8 333 056
- US-A- 3 356 785
- Electrical Distribution Engeneering, McGraw-Hill Book Company

## Beschreibung

Die Erfindung betrifft einen Schutz für Komponenten gasisolierter Schaltanlagen bei inneren Lichtbogenfehlern gegen Durchbrennen, wobei die Koponenten im wesentlichen aus einer mindestens an der Innenseite leitfähigen Hülse als Außenleiter und einen durch Stützer gehaltenen, rohrförmigen Innenleiter bestehen und wobei zur Erzeugung einer Rotation des Lichtbogens am Innenleiter im Abstand voneinander längliche Leiterbahnen vorgesehen sind, die gegen die Mittelachse des innenleiters mit einem Winkel geneigt sind, der so bemessen ist, daß beim Auftreten eines Lichtbogens durch die dem Uchtbogen als Stromzuführung dienenden Leiterbahnen ein Magnetfeld entsteht weiches in Wechselwirkung mit dem Magnetfeld des Uchtbogens eine azimutale Kraft erzeugt, die stärker ist als die azimutalen Kräfte, die durch mögliche, zufällig auftretende Schräglagen des Lichtbogens entstehen können.

Obwohl die Wahrscheintichkeit für das Auftreten eines Störlichtbogens als Folge eines Isolationsversagens in einer metallgekapselten, SF₆-isolierten Hochspannungsanlage sehr gering ist, müssen auch für diesen Fall umfassende Schutzkonzepte angestrebt werden. Entsteht in einer SF₆-isolierten Anlage ein Störtichtbogen, so wandert dieser in axialer Richtung von der Stromeinspeisung weg, bis er von einem Stützer festgehalten wird. Ursache dieser Lichtbogenwanderung ist die Wechselwirkung der Magnetfelder des Innen- und des Außenleiters mit dem Magnetfeld des Lichtbogens. An einem solchen Stützer kommt es in der Mehrzahl der Fälle zu einer Stabilisierung des Bogenfußpunktes auf einem Punkt der Außenhülle, und es besteht die Gefahr, daß diese im Fußpunktbereich durchgeschweißt wird.

Ein Schutz für Komponenten gasisolierter Schaltanlagen der eingangs genannten Art ist aus der CH-A-596 686 bekannt. Darin ist eine metallgekapselte Hochspannungsanlage beschrieben, in der ein von Stützern gehaltener Innenleiter angeordnet ist. An dem Innenleiter in der Nähe zumindest eines Stützers ist eine Einlage befestigt, die aus einem mit Einschnitten versehenen Blechmantel besteht.

Die Einlage ist an ihrem einen Ende mit dem Innenleiter galvanisch verbunden, an ihrem anderen Ende gegenüber dem Innenleiter elektrisch isoliert. Durch die Einschnitte in der Einlage werden Leiterbahnen gebildet.

Die Leiterbahnen nehmen den Fußpunkt eines wandernden Lichtbogens auf, sie sind dann von Strom durchflossen, der ein Magnetfeld erzeugt, welches mit dem von dem Lichtbogen erzeugten Magnetfeld in Wechselwirkung steht. Dadurch wird der Lichtbogen zur Rotation gezwungen, und es ist eine punktuelle Hitzebelastung der Metallkapselung der Hochspannungsanlage ausgeschlossen. Nachteilig ist der verhältnismäßig große konstruktive Aufwand für die Anbringung der Leiterbahnen an dem Innenleiter, denn die Leiterbahnen befinden sich an einem eigenen Bauteil, welches an dem Innenleiter montiert werden muß.

Der Erfindung liegt die Aufgabe zugrunde, einen Schutz für Komponenten gasisolierter Schaltanlagen bei inneren Lichtbogenfehlern gegen Durchbrennen verfügbar zu machen, der mit geringem konstruktivem Aufwand kostengünstig hergesteilt werden kann.

Diese Aufgabe wird erfindungsgemäß dadurch gelöst, daß die Leiterbahnen als durch Schlitze voneinander getrennte Stege des Innenleiters ausgebildet sind.

Die erfindungsgemäßen Lösungen haben den Vorteil, daß Komponenten gasisolierter Schaltanlagen mit einfachen konstruktiven maßnahmen - und damit wirtschaftlich herstellbar - gegen ein Durchbrennen aufgrund innerer Lichtbogenfehler geschützt werden können. Es sind weder zusätzliche Einsätze wie Spulen oder Blechmäntel noch ein zusätzlicher Materialaufwand erforderlich.

Dadurch daß der Lichtbogen auf eine Rotationsbahn gebracht wird, rotiert er vor dem Stützer, ohne diesen zu beschädigen oder die Wandung vor dem Stützer durchzubrennen. Diese Rotation des Lichtbogens ist ohne Beschädigung der betroffenen Komponente während einer für solche Schäden verhältnismäßig langen Zeitspanne möglich. Während dieser Zeitspanne kann die Anlage ohne Probleme abgeschaltet werden.

Der Erfindung liegt der Gedanke zugrunde, daß eine Stabilisierung des Lichtbogenfußpunktes auf der Anlagenhülle verhindert werden muß.

Dies kann nach beendeter axialer Wanderung des Lichtbogens nur dadurch erfolgen, daß eine Wanderung des Lichtogens in azimutaler Richtung stattfindet.

Eine solche Rotation des Lichtbogens wird dadurch bewirkt, daß die Stromzuführung zum Lichtbogen so gestaltet wird, daß deren Magnetfeld mit dem Magnetfeld des Lichtbogenstromes in eine Wechselwirkung tritt, welche eine azimutale Kraft auf den Lichtbogen zur Folge hat, der dadurch in Rotation versetzt wird.

Weiterbildungen und zweckmässige Ausgestaltungen der Erfindung sind den Unteransprüchen zu entnehmen.

Die Erfindung wird nachfolgend anhand der Zeichnungen erläutert.

Es zeigen:
- Figur 1: einen Ausschnitt aus einer Komponente, rechts quer und links längs geschnitten, mit einem der Erläuterung dienenden Zylinderkoordinatensystem,
- Figur 2: eine nach der ersten Lösungsalternative ausgebildete Komponente im Schnitt.
- Figur 3: eine Leiterbahn mit Zerlegung des Stromes in seine Komponenten,
- Figur 4: eine vergrösserte Darstellung des rohrförmigen Innenleiters nach Figur 2 und
- Figur 5: eine Komponente nach der zweiten Lösungsalternative.

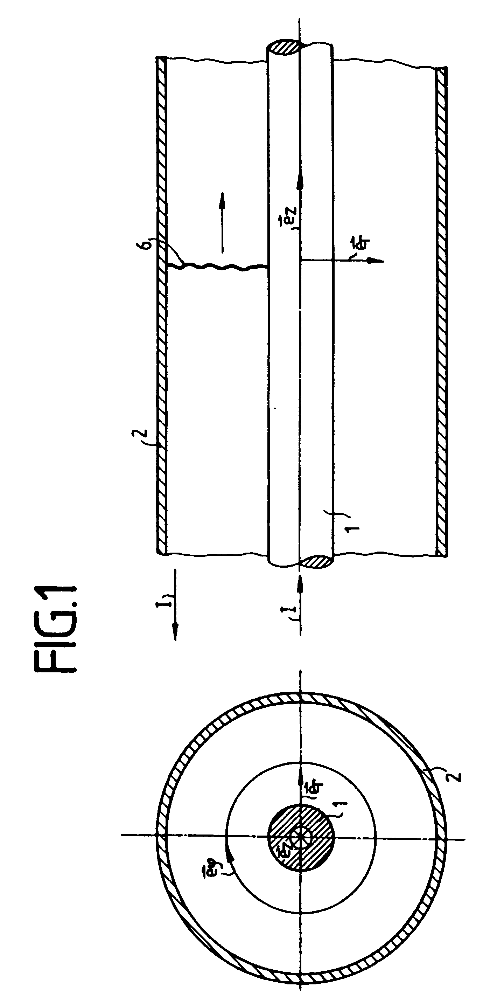

Figur 1 zeigt einen Ausschnitt aus einer Komponente einer gasisolierten Schaltanlage, wobei diese links quer zu ihrer Achse geschnitten ist und rechts in Richtung der Längsachse. Ein Innenleiter 1 wird von einem Aussenleiter 2, der gleichzeitig als Hülle dient, umgeben. Zwischen dem Innenleiter 1 und dem Aussenleiter 2 befindet sich das SF₆ als Isoliergas. Zur Erläuterung der nachstehend dargestellten Erfindung dient das Zylinderkoordinatensystem ez, er und eφ, welches in die Fgur 1 eingetragen ist. Ein Lichtbogen 6 wandert in einer solchen Komponente in Pfeilrichtung, wenn die Stromeinspeisung an dem Innenleiter von der linken Seite erfolgt. Der Rückfluss des Stromes im Aussenleiter findet dann in umgekehrter Richtung statt.

Der Lichtbogen läuft in einer solchen Komponente so lange in axialer Richtung, bis er auf einen Stützer trifft.

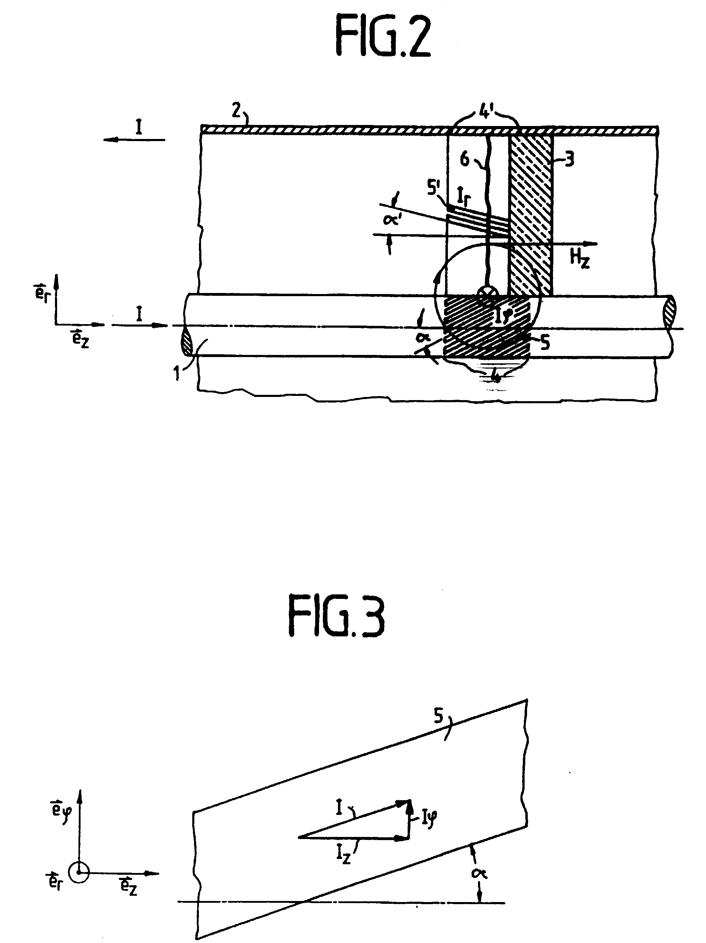

Figur 2 zeigt ein Ausführungsbeispiel gemäss der ersten Lösungsalternative im Schnitt. Der Innenleiter 1 wird von dem Aussenleiter 2 umgeben und durch einen Stützer 3 so festgehalten, dass die Achse des Innenleiters mit der Achse des Aussenleiters zusammenfällt. Der Innenleiter 1 ist als Rohr ausgestaltet, der Stützer 3 besteht aus einem Isoliermaterial, beispielsweise Giessharz, und der Aussenleiter 2 kann als metallische Hülle oder als Hülle aus nichtleitendem Material mit einer leitenden Schicht auf der Innenseite ausgestaltet sein. Der Innenleiter 1 besteht in seinem an den Stützer 3 angrenzenden Bereich 4 aus einer Vielzahl parallel verlaufender Leiterbahnen 5, welche gleichmässig über den Umfang verteilt sind. Diese Leiterbahnen 5 sind durch isolierende Streifen unterbrochen und weisen einen vorgegebenen Winkel α zur Achsrichtung auf.

Die Funktion dieses Ausführungsbeispiels wird anhand der Figuren 2 bis 4 erläutert:

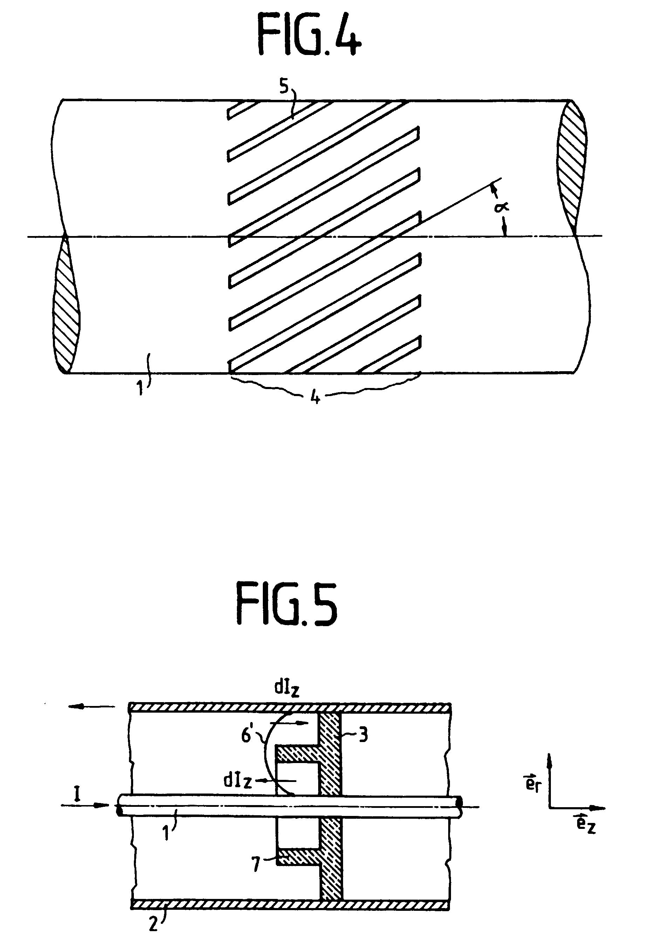

Figur 3 zeigt einen Abschnitt einer Leiterbahn 5, die einen Winkel α zur Achsrichtung aufweist und in die die Aufteilung des Stromes l in seine Komponenten in Z und in φ -Richtung eingezeichnet ist. Diese Leiterbahnen 5 sind zum Beispiel auf dem Innenleiter 1 im Bereich 4 angeordnet, wie dies in Figur 4 dargestellt ist.

Diese Kräfte entstehen durch die in Figur 3 dargestellte Stromkomponente wie lφ, welche das in Figur 2 dargestellte Magnetfeld Hz erzeugt, das in Wechselwirkung mit dem durch den Lichtbogenstrom erzeugten Magnetfeld eine azimutale, auf den Lichtbogen 6 wirkende Antriebskraft hervorbringt.

Der Winkel α der Leiterbahn 5 muss so bemessen sein, dass beim Auftreten eines Lichtbogens 6, durch die dem Lichtbogen 6 als Stromzuführung dienenden Leiterbahnen 5, ein Magnetfeld entsteht, welches in Wechselwirkung mit dem Magnetfeld des Lichtbogens 6 eine azimutale Kraft erzeugt, die stärker ist als die azimutalen Kräfte, die durch mögliche, zufällig auftretende Schräglagen des Lichtbogens 6 entstehen können. Auf diese Weise kann mit absoluter Sicherheit eine Rotation des Lichtbogens gewährleistete werden.

Die Leiterbahnen 5 können auf einem rohrförmigen Innenleiter 1 als Stege ausgebildet sein, wobei diese Stege zum Beispiel durch Einarbeiten von Schlitzen hergestellt werden können. Die Leiterbannen 5 können auf dem Innenleiter 1 jedoch auch in Form von Rippen aus besonders leitfähigem Material angeordnet sein. Für die Ausbildung des entsprechenden Magnetfeldes kann es ausreichen, wenn diese Rippen aus besonders leitfähigem Material Zwischenräume aufweisen, an deren Grund sich weniger leitfähiges Material befindet.

Die an den Stützer 3 angrenzende Bereiche 4, 4' des Innenleiters 1 und/oder des Aussenleiters 2 können zur Optimierung des Durchbrennschutzes aus einem Material bestehen, dass gute Laufeigenschaften für den Lichtbogen aufweist. wie zum Beispiel Kupfer. Dadurch wird die Rotation des Lichtbogens begünstigt, der Fusspunkt wandert noch schneller, wodurch auf dem Aussenleiter 2 die Erwärmung verringert wird. Auf diese Weise kann die Wirksamkeit der Anordnung weiter erhöht werden.

Fgur 5 zeigt einen Schutz für Komponenten gasisolierter Schaltanlagen nach der zweiten Lösungsalternative. Die Komponente ist im Bereich eines Stützers längs der Achse geschnitten. Sichtbar ist der Innenleiter 1, der Aussenleiter 2 und der Stützer 3 sind im Schnitt zu sehen. Der Stützer 3 hält auch bei dieser Ausgestaltung den Innenleiter 1 so, dass dessen Achse mit der Achse des Aussenleiters 2 zusammenfällt. Nach dieser Alternative ist der Stützer 3 auf seiner der Stromquelle zugewandten Seite mit einer kreisförmigen, in den Raum zwischen Innenleiter 1 und Aussenleiter 2 hineinragenden Erhebung 7 ausgestattet. Die Erhebung 7 kann als zylindrischer Ring, als torusförmige Erhebung oder in einer anderen Gestalt ausgebildet sein. Die Erhebung 7 besteht aus Isolierstoff, entweder demselben Isolierstoff wie das Material des Stützers 3 oder aus einem besonders abrandfesten Isolierstoff.

Der Stützer 3 kann auch beidseitig mit einer solchen Erhebung 7 ausgestattet sein. Dies ist besonders in solchen Anlagenteilen zweckmässig, die durch Vernetzung oder Kapazitäten im Falle eines Kurzschlusses von der einen oder anderen Seite mit Strom beaufschlagt werden können. Die Höhe einer solchen kreisringförmigen Erhebung 7 des Stützers 3 ist im Vergleich zu den äusseren und inneren, an die Leiter 1, 2 angrenzenden Bereichen des Stützers 3, so zu bemessen, dass die Wechselwirkung des Magnetfeldes, verursacht durch den Stromfluss der Leiter 1, 2, mit dem Magnetfeld, welches durch den durch die Erhebung 7 gekrümmten Lichtbogen 6' entsteht, eine so starke Kraft erzeugt, dass diese den Lichtbogen 6' aus der mittels der Erhebung 7 erzwungenen Lage drückt und die Ausbildung eines stehenden, stabilen Lichtbogens nicht mehr möglich ist.

Die Funktion dieser Ausbildung beruht darauf, dass der Lichtbogen in eine Lage gezwungen wird, bei der Stromkomponenten dl_{z} im Lichtbogen 6' entstehen, die der Stromzuführung durch den Innenleiter 1, beziehungsweise dem Stromabfluss durch den Aussenleiter 2, entgegengesetzt sind. Diese entgegengesetzten Ströme sind von Magnetfeldern umgeben, welche Kräfte erzeugen, die den Lichtbogen 6' in eine Lage zu drücken versuchen, bei der er eine umgekehrte Wölbung aufweist, wie die, die ihm durch die Erhebung 7 aufgezwungen wird. Bei dieser Lösungsalternative wirken zwar auf einen Lichtbogen, der sich völlig in der radialen Ebene befindet keine azimutalen Kräfte, jedoch bewirkt diese Anordnung die Herbeiführung einer völligen Instabilität dieser Lage des Lichtbogens. Diese Instabilität ist so stark, dass der Lichtbogen diese Lage nicht stabil einzuhalten vermag. Die geringfügigste Abweichung des Lichtbogens von dieser radialen Ebene führt jedoch sofort zu azimutalen Kräften, welche durch die Wechselwirkung der Magnetfelder hervorgerufen werden. Diese azimutalen Kräfte werden dann um so stärker, je mehr der Lichtbogen diese radiale Ebene verlässt, also eine gekrümmte Form oder eine Schieflage einnimmt. Durch die beschriebene Anordnung wird somit eine Labilität dieser Gleichgewichtslage des Lichtbogens erzielt, die so stark ist, dass garantiert ist, dass der Lichtbogen 6' aus der Gleichgewichtslage kippt und zu rotieren beginnt.

Auch bei dieser Ausgestaltung ist es zweckmässig für eine Verbesserung der Lichtbogenrotation die an den Stützer 3 angrenzende Bereiche 4, 4' des Innenleiters 1 wie des Aussenleiters 2 aus einem Material herzustellen, dass gute Laufeigenschaften für den Lichtbogen 6' aufweist. Als solches Material eignet sich vorzugsweise Kupfer.

Diese zweite Lösungsalternative mit einer Erhebung 7 des Stützers 3 kann selbstverständlich mit den Leiterbahnen 5 der ersten Lösungsalternative kombiniert werden. Dies ist dergestalt möglich, dass Leiterbahnen 5 auf dem Innenleiter 1 angeordnet werden. Durch diese Kombination kann der Schutz für Komponenten gasisolierter Schaltanlagen besonders wirksam gestaltet werden, da die die Rotation bewirkenden Kräfte erheblich erhöht sind und so die Rotationsgeschwindigkeit des Lichtbogens entsprechend gross wird, womit sich die Belastung durch den Lichtbogenfusspunkt auf der Hülle entsprechend verringert.

## Patentansprüche

1. Schutz für Komponenten gasisolierter Schaltanlagen bei inneren Lichtbogenfehlern gegen Durchbrennen, wobei die Komponenten im wesentlichen aus einer mindestens an der Innenseite leitfähigen Hülse als Außenleiter (2) und einem durch Stützer (3) gehaltenen, rohrförmigen Innenleiter (1) bestehen und wobei zur Erzeugung einer Rotation des Lichtbogens (6) am Umfang des Innenleiters (1) in einem an den Stützer (3) angrenzenden Bereich eine Vielzahl parallel verlaufender Leiterbahnen (5) angeordnet ist, die gegen die Mittelachse des Innenleiters (1) mit einem Winkel (α) geneigt sind, der so bemessen ist, daß beim Auftreten eines Lichtbogens (6) durch die dem Lichtbogen (6) als Stromzuführung dienenden Leiterbahnen ein Magnetfeld entsteht, welches in Wechselwirkung mit dem Magnetfeld des Lichtbogens (6) eine azimutale Kraft erzeugt, die stärker ist als die azimutalen Kräfte, die durch mögliche, zufällig auftretende Schräglagen des Lichtbogens (6) entstehen können,
dadurch gekennzeichnet,
daß die Leiterbahnen (5) als durch Schlitze voneinander getrennte Stege des Innenleiters (1) ausgebildet sind.

2. Schutz für Komponenten gasisolierter Schaltanlagen nach Anspruch 1,
dadurch gekennzeichnet,
daß an den Stützer (3) angrenzende Bereiche (4) des Innenleiters (1) aus Material bestehen, das gute elektrische Leitfähigkeit aufweist.

3. Schutz für Komponenten gasisolierter Schaltanlagen nach Anspruch 2,
dadurch gekennzeichnet,
daß das Material Kupfer ist.

4. Schutz für Komponenten gasisolierter Schaltanlagen nach einem der Ansprüche 1 bis 3,
dadurch gekennzeichnet,
dass der Stützer (3) mindestens auf seiner der Stromquelle zugewandten Seite, eine kreisringförmige, in den Raum zwischen Innen- (1) und Aussenleiter (2) hineinragende Erhebung (7) aufweist.

5. Schutz für Komponente nach Anspruch 4,
dadurch gekennzeichnet,
dass der Stützer (3) beidseitig kreisringförmige, in den Raum zwischen Innen- (1) und Aussenleiter (2) hineinragende Erhebungen (7) aufweist.

6. Schutz für Komponenten nach Anspruch 4 oder 5,
dadurch gekennzeichnet,
dass die Höhe der kreisringförmigen Erhebung (7) des Stützers (3), im Vergleich zu den äusseren und inneren, an die Leiter (1, 2) angrenzenden Bereiche des Stützers (3), so bemessen ist, dass die Wechselwirkung des Magnetfeldes, verursacht durch den Stromfluss der Leiter (1, 2), mit dem Magnetfeld, welches durch den durch die Erhebung (7) gekrümmten Lichtbogen (6') entsteht, eine so starke Kraft erzeugt, dass diese den Lichtbogen (6') aus der mittels der Erhebung (7) erzwungenen Lage drückt und die Ausbildung eines stehenden, stabilen Lichtbogens nicht mehr möglich ist.

7. Schutz für Komponenten nach einem oder mehreren der Ansprüche 4 bis 6,
dadurch gekennzeichnet,
dass die an den Stützer (3) angrenzenden Bereiche (4, 4') des Innenleiters (1) wie des Aussenleiters (2) aus Material bestehen, das gute Laufeigenschaften für den Lichtbogen (6') aufweist.

8. Schutz für Komponenten nach Anspruch 7,
dadurch gekennzeichnet,
dass das Material Kupfer ist.

## Claims

1. Protector, for components of gas-insulated switchgear, against burning out in the case of internal arc defects, wherein the components substantially consist of a sleeve, which is conductive at least at the inner side, as outer conductor (2) and a tubular inner conductor (1) held by a bushing (3) and wherein arranged at the circumference of the inner conductor (1) and in a region adjoining the bushing (3) is a plurality of parallelly extending conductor tracks (5) for producing a rotation of the arc (6), which tracks are inclined towards the centre axis of the inner conductor (1) at an angle (α) which is so dimensioned that, on the occurrence of an arc (6) by the conductor tracks serving as current supply to the arc (6), a magnetic field arises which in interaction with the magnetic field of the arc generates an azimuth force which is stronger than the azimuth forces which can arise through possible accidentally occurring inclined positions of the arc (6), characterised thereby that the conductor tracks (5) are constructed as webs, which are separated from one another by slots, of the inner conductor (1).

2. Protector for components of gas-insulated switchgear according to claim 1, characterised thereby that regions (4), which adjoin the bushing (3), of the inner conductor (1) consist of material which has good electrical conductivity.

3. Protector for components of gas-insulated switchgear according to claim 2, characterised thereby that the material is copper.

4. Protector, for components of gas-insulated switchgear, according to one of claims 1 to 3,
characterised thereby that the bushing (3) has, at least at its side facing the current source, a circular projection (7) projecting into the space between inner conductor (1) and outer conductor (2).

5. Protector for components according to claim 4, characterised thereby that the bushing (3) has, at both sides, projections (7) projecting into the space between inner conductor (1) and outer conductor (2).

6. Protector for components according to claim 4 or 5, characterised thereby that the height of the circular projection (7) of the bushing (3) by comparison with the outer and inner regions, which adjoin the conductors (1, 2), of the bushing (3) is so dimensioned that the interaction of the magnetic field, which is caused by the current flow of the conductors (1, 2), with the magnetic field, which arises by the arc (6') curved by the projection (7), produces such a strong force that this forces the arc (6') out of the position constrained by means of the projection (7) and the formation of a permanent stable arc is no longer possible.

7. Protector for components according to one or more of claims 4 to 6, characterised thereby that the regions (4), which adjoin the bushing (3), of the inner conductor (1) and of the outer conductor (2) consist of material which has good working characteristics for the arc (6').

8. Protector for components according to claim 7, characterised thereby that the material is copper.

## Revendications

1. Protection contre la brûlure pour des composants d'installations de distribution isolées au gaz, dans le cas d'erreurs internes d'arc, ces composants étant constitués sensiblement par une douille conductrice au moins sur la face intérieure et servant de conducteur extérieur (2) et par un conducteur intérieur (1) tubulaire maintenu par un isolateur support (3) et, pour générer une rotation de l'arc (6) à la périphérie du conducteur intérieur (1), une pluralité de pistes conductives (5) allongées qui s'étendent parallèlement entre elles étant disposées à distance les unes des autres dans une zone attenante à l'isolateur support (3), pistes qui sont inclinées par rapport à l'axe médian du conducteur intérieur (1) avec un angle (α) qui est mesuré de sorte qu'à l'apparition de l'arc (6) il se produit, à travers les pistes conductives servant d'amenée de courant à l'arc (6), un champ magnétique qui, en interaction avec le champ magnétique de l'arc (6), génère une force azimutale qui est plus forte que les forces azimutales pouvant résulter d'éventuelles positions inclinées de l'arc (6) se produisant par hasard, caractérisée en ce que
les pistes conductives (5) sont réalisées comme des moulures du conducteur intérieur (1), séparées les unes des autres par des fentes.

2. Protection pour des composants d'installations de distribution isolées au gaz selon la revendication 1,
caractérisée en ce que
des zones (4) du conducteur intérieur (1), attenantes à l'isolateur support (3), se composent d'une matière présentant une bonne conductibilité électrique.

3. Protection pour des composants d'installations de distribution isolées au gaz selon la revendication 2,
caractérisée en ce que
la matière est du cuivre.

4. Protection pour des composants d'installations de distribution isolées au gaz selon d'un des revendications 1 à 3,
caractérisée en ce que
l'isolateur support (3) présente, au moins sur l'une de ses faces tournées vers la source de courant, une élévation (7) circulaire, s'engageant dans l'espace entre le conducteur intérieur (1) et le conducteur extérieur (2).

5. Protection pour des composants selon la revendication 4,
caractérisée en ce que
l'isolateur support (3) présente, des deux côtés, des élévations (7) circulaires, s'engageant dans l'espace entre le conducteur intérieur (1) et le conducteur extérieur (2).

6. Protection pour des composants selon la revendication 4 ou 5, caractérisée en ce que
la hauteur de l'élévation circulaire (7) de l'isolateur support (3) en comparaison avec les zones extérieures et intérieures de l'isolateur support (3), attenantes aux conducteurs (1, 2), est dimensionnée de sorte que l'interaction du champ magnétique causé par le flux de courant des conducteurs (1, 2) avec le champ magnétique, qui résulte de l'arc courbé (6') par l'élévation (7), génère une force si importante que celle-ci expulse l'arc (6') de sa position imposée au moyen de l'élévation (7) et que la formation d'un arc stable, droit n'est plus possible.

7. Protection pour des composants selon l'un ou plusieurs des revendications 4 à 6,
caractérisée en ce que
les zones (4, 4') du conducteur intérieur (1) et du conducteur extérieur (2), attenantes à l'isolateur support (3) se composent d'une matière présentant de bonnes propriétés de propagation pour l'arc (6').

8. Protection pour des composants selon la revendication 7,
caractérisée en ce que
la matière est du cuivre.
